(19) Europäisches Patentamt
European Patent Office
Office européen des brevets

(11) EP 3 262 949 A1

(12) EUROPEAN PATENT APPLICATION
published in accordance with Art. 153(4) EPC

(43) Date of publication:
03.01.2018 Bulletin 2018/01

(51) Int Cl.:
*A23D 9/007* (2006.01)    *A23C 13/12* (2006.01)
*A23L 9/20* (2016.01)    *C11C 3/00* (2006.01)

(21) Application number: 16755552.3

(22) Date of filing: 24.02.2016

(86) International application number:
PCT/JP2016/055422

(87) International publication number:
WO 2016/136808 (01.09.2016 Gazette 2016/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 26.02.2015 JP 2015035958

(71) Applicant: The Nisshin OilliO Group, Ltd.
Tokyo 104-8285 (JP)

(72) Inventors:
• SUZUKI, Kumiko
Yokosuka-shi
Kanagawa 235-8558 (JP)
• NAKAHARA, Hiroko
Yokosuka-shi
Kanagawa 235-8558 (JP)
• TODA, Toru
Yokosuka-shi
Kanagawa 235-8558 (JP)

(74) Representative: Müller-Boré & Partner
Patentanwälte PartG mbB
Friedenheimer Brücke 21
80639 München (DE)

(54) POWDERED FAT COMPOSITION FOR CREAMS

(57) An object of the present invention is to provide a powdered fat and/or oil composition for creams for producing creams having a favorable melt-in-the-mouth, a sufficient shape retainability, and good appearance, mouthfeel, and flavor. The present invention is a powdered fat and/or oil composition for creams, containing a fat and/or oil composition in a powder form satisfying the following condition (a). (a) The fat and/or oil composition contains: 65 to 99% by mass of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying y≤22.

EP 3 262 949 A1

## Description

Technical Field

The present invention relates to a powdered fat and/or oil composition for creams for producing creams having a favorable melt-in-the-mouth, a sufficient shape retainability, and good appearance, mouthfeel, and flavor. Moreover, the present invention also relates to creams produced by using such a powdered fat and/or oil composition as described above, and a method for producing the creams.

Background Art

Generally, creams are used for decorations of breads and Western confectionery products, and so forth. Heretofore, there have been various types of creams. For example, butter cream is a creamy food obtained by adding an aqueous food product such as meringue or syrup to an oily food product such as butter, margarine, or shortening, and then whipping the mixture. Butter cream is not only a common food material for Western confectionery products, but also widely used as filling and sandwich cream for breads. Such butter cream is excellent in shape retainability and storage stability in comparison with oil-in-water emulsions such as fresh cream, but has disadvantages such as poor melt-in-the-mouth and poor aftertaste. Further, for example, whipped cream is a creamy food obtained by whipping raw-material cream to have a foamability, and utilized as filling and decorations of Western confectionery products and so forth. The cream is roughly categorized into three types: ones constituted only of milk fat (fresh cream, reconstituted cream), ones constituted of a mixture of milk fat with another fat and/or oil (compound cream), or ones constituted of a fat and/or oil other than milk fat (synthetic cream) . Nevertheless, even when any of these creams is used, the resulting whipped creams need to be enhanced in terms of melt-in-the-mouth and shape retainability.

Hence, in order to enhance the melt-in-the-mouth, shape retainability, and so forth of these creams, various efforts have been made so far in conventional techniques. As one of them, there is known a technique in which a powdered fat and/or oil is added to enhance the melt-in-the-mouth, shape retainability, and so forth of creams. For example, there is described a technique in which a fat and/or oil base serving as a main body of a plastic fat and/or oil such as shortening or margarine is mixed with a powdered fat and/or oil constituted only of fat and/or oil, mainly made of a hydrogenated oil having a melting point of 45°C or higher, whose powder particle sizes are 200 $\mu$m or less, so that butter cream or sandwich cream is produced with a favorable melt-in-the-mouth and no shape deformation even at high temperatures (shape retainability) (Patent Literature 1). However, this technique is not to add a powdered fat and/or oil having properties as in the present invention, but is a technique specialized in butter creams. Accordingly, it is not intended to enhance the melt-in-the-mouth, shape retainability, and so forth of other creams such as whipped cream. Hence, there have been demands for a more convenient technique for enhancing the melt-in-the-mouth, shape retainability, and so forth of creams in general.

Citation List

Patent Literature

Patent Literature 1: Japanese Examined Patent Application Publication No. Hei 8-27

Summary of Invention

Technical Problem

An object of the present invention is to provide a powdered fat and/or oil composition for creams for producing creams having a favorable melt-in-the-mouth, a sufficient shape retainability, and good appearance, mouthfeel, and flavor.

Solution to Problem

The present inventors have conducted intensive study on a method for producing creams having a favorable melt-in-the-mouth and a sufficient shape retainability. As a result, the inventors have surprisingly found that a favorable melt-in-the-mouth, a sufficient shape retainability, and so forth are obtained by using a powdered fat and/or oil composition which satisfies a specific condition. This finding has led to the completion of the present invention. Moreover, the inventors have surprisingly found that the use of the powdered fat and/or oil composition satisfying the specific condition improves the appearance, mouthfeel, and flavor, too. This finding has led to the completion of the present invention.

Specifically, one aspect of the present invention makes it possible to provide a powdered fat and/or oil composition for creams, comprising a fat and/or oil composition in a powder form satisfying the following condition (a), wherein

(a) the fat and/or oil composition comprises:

65 to 99% by mass of a XXX triglyceride having fatty acid residues X, each with x carbon atoms, at positions 1 to 3; and
35 to 1% by mass of one or more types of X2Y triglycerides each having a fatty acid residue Y with y carbon atoms in place of one of the fatty acid residues X of the XXX triglyceride, provided that a total triglyceride content is 100% by mass,

x number of carbon atoms is an integer selected from 8 to 20, and
y number of carbon atoms is each independently an integer selected from x+2 to x+12 and satisfying $y \leq 22$.
Moreover, a preferable aspect of the present invention makes it possible to provide the powdered fat and/or oil composition comprising:

80 to 99% by mass of the XXX triglyceride; and
20 to 1% by mass of the one or more types of X2Y triglycerides in total.

Moreover, a preferable aspect of the present invention makes it possible to provide the powdered fat and/or oil composition, wherein
the x is an integer selected from 10 to 18, and
the y is each independently an integer selected from x+2 to x+10 and satisfying $y \leq 22$.
Moreover, a preferable aspect of the present invention makes it possible to provide the powdered fat and/or oil composition, wherein
the x is an integer selected from 10 to 12, and
the y is each independently an integer selected from x+4 to x+8 and satisfying $y \leq 22$.
Moreover, a preferable aspect of the present invention makes it possible to provide the powdered fat and/or oil composition, which has a loose bulk density of 0.1 to 0.6 $g/cm^3$.
Further, one aspect of the present invention makes it possible to provide a cream comprising the powdered fat and/or oil composition.
Moreover, a preferable aspect of the present invention makes it possible to provide the cream blended with 1 to 20% by mass of the powdered fat and/or oil composition in a raw material of the cream.
Furthermore, one aspect of the present invention makes it possible to provide a method for producing a cream obtained by blending the powdered fat and/or oil composition.
Moreover, a preferable aspect of the present invention makes it possible to provide the method for producing a cream, comprising blending 1 to 20% by mass of the powdered fat and/or oil composition into a raw material of the cream.
Further, one aspect of the present invention makes it possible to provide a cream quality improver comprising the powdered fat and/or oil composition as an active ingredient.

Advantageous Effects of Invention

The present invention makes it possible to easily produce creams having a favorable melt-in-the-mouth and a sufficient shape retainability by using a powdered fat and/or oil composition satisfying a specific condition. Moreover, the creams of the present invention are excellent also in appearance, flavor, mouthfeel, and so forth in comparison with conventional products, and accordingly can meet the demand of those who cannot be satisfied by conventional creams.
Further, since the present invention can shorten the cream production time (mixing time), there is also a possibility of achieving a production cost reduction for the mass production. In addition, the effect of well balancing the flavor of the original cream and the flavor of a flavoring can also be expected.

Description of Embodiments

Hereinafter, creams of the present invention will be described one by one.

<Creams>

In the present invention, "creams" refer to emulsions obtained by mixing an oil phase and a water phase. Examples thereof include fresh cream, whipped cream, butter cream, pastry cream, and the like. Particularly, butter cream and whipped cream are preferable.

<Fat and/or Oil Composition>

The present invention relates to a fat and/or oil composition containing: 65 to 99% by mass of at least one type of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass. In the fat and/or oil composition, x number of carbon atoms is an integer selected from 8 to 20, and y number of carbon atoms is each independently an integer selected from x+2 to x+12 and selected from a condition satisfying $y \leq 22$. The fat and/or oil composition containing the two types of the triglycerides in the above-described % by mass easily forms a fat and/or oil composition in a powder form without incorporating an additive such as an emulsifier or an excipient. The fat and/or oil composition and the powdered fat and/or oil composition of the present invention have been described in detail in PCT/JP2015/070850 (Japanese Patent Application No. 2014-149168) already filed. Accordingly, the detail will be omitted here. Note that the content of this application is incorporated herein. Hereinafter, characteristics of the fat and/or oil composition and the powdered fat and/or oil composition of the present invention will be summarized and described.

<XXX Triglyceride>

The fat and/or oil composition of the present invention contains a single type or multiple types, preferably a single type (one type), of the XXX triglyceride whose content is 65 to 99% by mass provided that a total triglyceride content is 100% by mass. The XXX triglyceride is a triglyceride having fatty acid residues X, each with x carbon atoms, at positions 1 to 3, and each of the fatty acid residues X is the same as the others. Herein, x number of carbon atoms is an integer selected from 8 to 20, preferably an integer selected from 10 to 18, more preferably an integer selected from 10 to 16, and furthermore preferably an integer selected from 10 to 12.
The fatty acid residues X may be saturated or unsaturated fatty acid residues. Specific examples of the fatty acid residues X include residues such as caprylic acid, capric acid, lauric acid, myristic acid, palmitic acid, stearic acid, and arachidic acid, but are not limited thereto. The fatty acids are more preferably capric acid, lauric acid, myristic acid, palmitic acid, and stearic acid, furthermore preferably capric acid, lauric acid, myristic acid, and palmitic acid, and still furthermore preferably capric acid and lauric acid.
The content of the XXX triglyceride is 65 to 99% by mass relative to 100% by mass of all triglycerides in the fat and/or oil composition. The content of the XXX triglyceride is preferably 75 to 99% by mass, more preferably 80 to 99% by mass, furthermore preferably 83 to 98% by mass, particularly preferably 85 to 98% by mass, and still furthermore preferably 90 to 98% by mass.

<X2Y Triglyceride>

The fat and/or oil composition of the present invention contains one or more types of the X2Y triglycerides each having a fatty acid residue Y with y carbon atoms in place of one of the fatty acid residues X of the XXX triglyceride. Herein, each of the fatty acid residues X contained in one X2Y triglyceride is the same as the other, and is also the same as the fatty acid residues X of the XXX triglyceride . The y number of carbon atoms of the fatty acid residue Y contained in the one X2Y triglyceride is an integer selected from x+2 to x+12 under a condition satisfying $y \leq 22$. The y number of carbon atoms is an integer selected from a condition preferably satisfying y = x+2 to x+10, more preferably satisfying y = x+4 to x+8. Moreover, the upper limit value of the y number of carbon atoms is preferably $y \leq 20$, more preferably $y \leq 18$. The fat and/or oil composition of the present invention may contain multiple, for example, two types to five types, preferably three or four types, of the X2Y triglycerides. In such cases, the definition of each of the X2Y triglycerides is as described above . The y number of carbon atoms of the fatty acid residue Y of each X2Y triglyceride is selected within the above-described range independently from the other X2Y triglyceride. For example, in a case where the fat and/or oil composition of the present invention is produced by interesterifying tricaprin and a highly hydrogenated oil of palm kernel stearin, the composition contains four types of the X2Y triglycerides in which all the x's satisfy x = 10, while y's satisfy y = 12, 14, 16, and 18, respectively.
The fatty acid residue Y may be a saturated or unsaturated fatty acid residue . Specific examples of the fatty acid residue Y include residues such as lauric acid, myristic acid, palmitic acid, stearic acid, arachidic acid, and behenic acid, but are not limited thereto. The fatty acid is more preferably myristic acid, palmitic acid, stearic acid, arachidic acid, and behenic acid, and furthermore preferably myristic acid, palmitic acid, and stearic acid.
The fatty acid residue Y of the X2Y triglyceride may be located at any one of positions 1 to 3 thereof.
The content of the X2Y triglycerides is 35 to 1% by mass relative to 100% by mass of all the triglycerides in the fat and/or oil composition. The content of the X2Y triglycerides is, for example, 25 to 1% by mass, preferably 20 to 1% by mass, more preferably 17 to 1% by mass, furthermore preferably 15 to 2% by mass, and still furthermore preferably 10 to 2% by mass. In the case where the fat and/or oil composition of the present invention contains multiple X2Y triglycerides, the amount of the X2Y triglycerides is a total amount of the X2Y triglycerides contained.

<Other Triglycerides>

The fat and/or oil composition of the present invention may contain other triglycerides than the above-described XXX triglyceride and X2Y triglycerides, as long as the effects of the present invention are not impaired. The other triglycerides may be multiple types of triglycerides, or may be synthetic fats and/or oils or natural fats and/or oils. The synthetic fats and/or oils include glyceryl tricaprylate, glyceryl tricaprate, and the like. Examples of the natural fats and/or oils include cocoa butter, sunflower seed oil, rapeseed oil, soybean oil, cottonseed oil, and the like. The other triglycerides may be contained in an amount of 1% by mass or more, for example, approximately 5 to 30% by mass, relative to 100% by mass of all the triglycerides in the fat and/or oil composition of the present invention without problems. The content of the other triglycerides is, for example, 0 to 30% by mass, preferably 0 to 18% by mass, more preferably 0 to 15% by mass, and furthermore preferably 0 to 8% by mass.

<Other Ingredients>

The fat and/or oil composition of the present invention may optionally contain ingredients, such as an emulsifier, a flavoring, a skim milk powder, a whole milk powder, a cocoa powder, sugar, and dextrin, other than the above-described triglycerides. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the fat and/or oil composition is 100% by mass, for example. Preferably, 90% by mass or more of the other ingredients are a powder having an average particle diameter of 1000 $\mu$m or less, and more preferably a powder having an average particle diameter of 500 $\mu$m or less. Note that the term average particle diameter herein is a value measured according to laser diffraction/scattering methods (ISO133201 and ISO9276-1).

However, a preferable fat and/or oil composition of the present invention is preferably substantially constituted only of a fat and/or oil. Herein, the fat and/or oil is substantially constituted only of triglycerides. Moreover, the term "substantially" means that the content of an ingredient(s) other than the fat and/or oil incorporated in the fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Powdered Fat and/or Oil Composition>

The powdered fat and/or oil composition of the present invention can be obtained by melting the triglycerides incorporated in the above-described fat and/or oil composition to obtain the fat and/or oil composition in a molten state, and cooling this fat and/or oil composition, so that a fat and/or oil composition in a powder form (powdered fat and/or oil composition) is obtained without adopting special processing means such as spraying and mechanical pulverization with a pulverizer such as a mill. More specifically, the fat and/or oil composition containing the XXX triglyceride and the X2Y triglycerides is optionally heated and melted, and a fat and/or oil composition in a molten state thus obtained is then cooled to form a solid having voids with a larger volume than the fat and/or oil composition in the molten state. The obtained solid is pulverized (loosened) by adding a light impact from the outside, for example, by sieving. In this manner, a powdered fat and/or oil composition can be obtained easily.

<Physical Properties of Powdered Fat and/or Oil Composition>

The powdered fat and/or oil composition of the present invention is a powdered solid at room temperature (20°C).
The powdered fat and/or oil composition of the present invention, for example, if substantially constituted only of a fat and/or oil, has a loose bulk density of 0.1 to 0.6 g/cm$^3$, preferably 0.15 to 0.5 g/cm$^3$, and more preferably 0.2 to 0.4 g/cm$^3$. Herein, a "loose bulk density" refers to a packing density determined by letting a powder naturally fall. A loose bulk density (g/cm$^3$) is measured, for example, by: letting an appropriate amount of a powdered fat and/or oil composition fall approximately 2 cm above an upper opening end of a graduated cylinder with an inner diameter 15 mm $\times$ 25 mL to loosely fill the graduated cylinder; measuring a mass (g) and reading a volume (mL) thus filled; and calculating a mass (g) of the powdered fat and/or oil composition per mL to determine the loose bulk density. Alternatively, a loose bulk density can also be calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of a sample is let fall toward a receiver (a 100-mL cylindrical container with an inner diameter of 40 mm $\times$ a height of 85 mm) from a height position 38 mm above an upper opening of the receiver. The sample protruding from the receiver is slid off, and a mass (A g) of the sample corresponding to the internal capacity (100 mL) of the receiver is weighed, so that a loose bulk density can be determined from the following formula.

$$\texttt{Loose bulk density (g/mL)} = \texttt{A (g)/100 (mL)}$$

The measurement is preferably repeated three times to obtain the average.

<Method for Producing Powdered Fat and/or oil Composition>

The powdered fat and/or oil composition of the present invention can be produced by a method including the following steps of:

(a) preparing a fat and/or oil composition containing 65 to 99% by mass of a XXX triglyceride having fatty acid residues X, each with x carbon atoms, at positions 1 to 3, and 35 to 1% by mass of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying $y \leq 22$;
(b) optionally heating the fat and/or oil composition to melt the triglycerides incorporated in the fat and/or oil composition, thereby obtaining the fat and/or oil composition in the molten state; and
(d) cooling the fat and/or oil composition in the molten state to obtain a powdered fat and/or oil composition.

Additionally, the method may include, as step (c), an optional step(s) for promoting the powder formation, for example, a seeding step (c1), a tempering step (c2), and/or a pre-cooling step (c3), between steps (b) and (d). Further, the powdered fat and/or oil composition obtained in step (d) may be a fat and/or oil composition in a powder form obtained by step (e) of pulverizing a solid obtained after the cooling in step (d).

(a) Fat and/or Oil Composition Preparation Step I

The fat and/or oil composition prepared in step (a) contains a XXX triglyceride (at least one type) and a X2Y triglyceride (at least one type) in the above-described % by mass. Specifically, for example, the fat and/or oil composition is obtained through steps of : separately preparing and mixing a XXX triglyceride (at least one type) having fatty acid residues X, each with x carbon atoms, at positions 1 to 3 and a YYY triglyceride (at least one type) having fatty acid residues Y, each with y carbon atoms, at positions 1 to 3 at a mass ratio of XXX triglyceride/YYY triglyceride being 90/10 to 99/1 to obtain a reaction substrate (herein, x number of carbon atoms is an integer selected from 8 to 20, and y number of carbon atoms is an integer selected from x+2 to x+12 and satisfying $y \leq 22$) ; and heating the reaction substrate, followed by an interesterification in the presence of a catalyst.

(a) Fat and/or Oil Composition Preparation Step II

The method for producing the fat and/or oil composition prepared in step (a) of the present invention further includes a method in which a XXX triglyceride and a X2Y triglyceride are simultaneously and directly synthesized as described below. Specifically, to obtain a XXX triglyceride and a X2Y triglyceride in this preparation step II, a XXX triglyceride and a YYY triglyceride are not separately synthesized for the interesterification, but raw materials (fatty acids or fatty acid derivatives and glycerin) for producing both of the triglycerides are introduced into, for example, a single reaction vessel to simultaneously and directly synthesize the triglycerides.

(a) Fat and/or Oil Composition Preparation Step III

Further, the fat and/or oil composition may be obtained as the fat and/or oil composition containing 65 to 99% by mass of the XXX triglyceride and 35 to 1% by mass of the X2Y triglyceride by: preparing a fat and/or oil composition containing the XXX triglyceride outside the range of 65 to 99% by mass and/or the X2Y triglyceride outside the range of 35 to 1% by mass; and then further adding the XXX triglyceride or the X2Y triglyceride (preparation of the fat and/or oil composition by dilution) . For example, after a fat and/or oil composition containing 50 to 70% by mass of the XXX triglyceride and 50 to 30% by mass of the X2Y triglyceride is obtained, a desired amount of the XXX triglyceride may be added to obtain the fat and/or oil composition containing 65 to 99% by mass of the XXX triglyceride and 35 to 1% by mass of the X2Y triglyceride.

(b) Step of Obtaining the Fat and/or Oil Composition in Molten State

Before step (d), if the fat and/or oil composition obtained in step (a) is in a molten state when prepared, the fat and/or oil composition is directly cooled without heating. Meanwhile, if the fat and/or oil composition is not in a molten state when obtained, the fat and/or oil composition is optionally heated to melt the triglycerides incorporated in the fat and/or oil composition, so that the fat and/or oil composition in the molten state is obtained.

Herein, it is appropriate to heat the fat and/or oil composition at a temperature not lower than melting points of the triglycerides incorporated in the fat and/or oil composition, particularly at a temperature at which the XXX triglyceride and the X2Y triglyceride can be melted, for example, 70 to 200°C, preferably 75 to 150°C, and more preferably 80 to 100°C. Moreover, it is appropriate to continue the heating for, for example, 0.5 to 3 hours, preferably 0.5 to 2 hours, and more preferably 0.5 to 1 hour.

(d) Step of Cooling Fat and/or Oil Composition in Molten State to Obtain Powdered Fat and/or Oil Composition

Further, the fat and/or oil composition in the molten state obtained in step (a) or (b) is cooled to form a powdered fat and/or oil composition.

Herein, "cooling the fat and/or oil composition in the molten state" and similar phrases mean keeping the fat and/or oil composition in the molten state at a temperature lower than the melting point of the fat and/or oil composition. The "temperature lower than the melting point of the fat and/or oil composition" is, for example, a temperature lower by 1 to 30°C than the melting point, preferably a temperature lower by 1 to 20°C than the melting point, and more preferably a temperature lower by 1 to 15°C than the melting point. The cooling of the fat and/or oil composition in the molten state is performed, for example, when x is 8 to 10, such that the cooling makes the final temperature reach a temperature of preferably 10 to 30°C, more preferably 15 to 25°C, and furthermore preferably 18 to 22°C. The final temperature in the cooling is, for example, when x is 11 or 12, preferably 30 to 40°C, more preferably 32 to 38°C, and furthermore preferably 33 to 37°C; when x is 13 or 14, preferably 40 to 50°C, more preferably 42 to 48°C, and furthermore preferably 44 to 47°C; when x is 15 or 16, preferably 50 to 60°C, more preferably 52 to 58°C, and furthermore preferably 54 to 57°C; when x is 17 or 18, preferably 60 to 70°C, more preferably 62 to 68°C, and furthermore preferably 64 to 67°C; when x is 19 or 20, preferably 70 to 80°C, more preferably 72 to 78°C, and furthermore preferably 74 to 77°C. At the above-described final temperatures, it is appropriate to leave standing the fat and/or oil composition in the molten state for, for example, preferably 2 hours or longer, more preferably 4 hours or longer, and furthermore preferably 6 hours to 2 days. In some cases, for example, if it takes time for powdering relatively as in a case where x number of carbon atoms of the fatty acid residues X of the XXX triglyceride is 8 to 12, particularly in a case where the following step (c) is not adopted, the fat and/or oil composition in the molten state may have to be left standing for, for example, 2 to 8 days, specifically 3 to 7 days, and more specifically approximately 6 days.

(c) Step of Promoting Powder Formation

Further, as the optional step (c) for promoting the powder formation between steps (a) or (b) and (d), the fat and/or oil composition in the molten state to be used in step (d) may be treated by a seeding process (c1), a tempering process (c2), and/or a pre-cooling process (c3).

Herein, the seeding process is a method for promoting powdering by adding a small amount of an ingredient, which serves as a powder core (seed), during the cooling of the fat and/or oil composition in the molten state. Specifically, for example, targeting the fat and/or oil composition in the molten state obtained in step (b), a fat and/or oil powder containing preferably 80% by mass or more, more preferably 90% by mass or more, of a XXX triglyceride with the same number of carbon atoms as the XXX triglyceride in the fat and/or oil composition is prepared as the ingredient which serves as the core (seed). This fat and/or oil powder serving as the core is added in an amount of 0.1 to 1 part by mass, preferably 0.2 to 0.8 parts by mass, to 100 parts by mass of the fat and/or oil composition in the molten state when the temperature of the fat and/or oil composition reaches a temperature of, for example, the final cooling temperature ±0 to +10°C, preferably +5 to +10°C, during the cooling of the fat and/or oil composition in the molten state . In this manner, this method promotes powdering of the fat and/or oil composition.

The tempering process is a method for promoting powdering of the fat and/or oil composition by one-time cooling before the fat and/or oil composition in the molten state is left standing at the final cooling temperature in cooling the fat and/or oil composition. In this process, the fat and/or oil composition in the molten state is cooled to a temperature lower than the cooling temperature in step (d), for example, a temperature lower by 5 to 20°C, preferably a temperature lower by 7 to 15°C, and more preferably a temperature lower by approximately 10°C, for preferably 10 to 120 minutes, more preferably approximately 30 to 90 minutes.

The pre-cooling process (c3) is a method for temporarily pre-cooling, before the cooling in step (d), the fat and/or oil composition in the molten state obtained in step (a) or (b) at a temperature lower than the temperature for the molten state in step (a) or (b) but higher than the cooling temperature in step (d). The temperature higher than the cooling temperature in step (d) may be, for example, a temperature higher by 2 to 40°C than the cooling temperature in step (d), preferably a temperature higher by 3 to 30°C, more preferably a temperature higher by 4 to 30°C, and furthermore preferably a temperature higher by approximately 5 to 10 °C. Setting a lower temperature for the pre-cooling makes it possible to further shorten the cooling time at the cooling temperature in step (d). Thus, unlike the seeding process and the tempering process, the pre-cooling process is a method for allowing the promotion of powdering of the fat and/or oil composition only by decreasing the cooling temperature stepwise, and has a great advantage in industrial production.

(e) Step of Pulverizing Solid to Obtain Powdered Fat and/or Oil Composition

Step (d) of obtaining the powdered fat and/or oil composition by cooling described above may be performed, more specifically, by step (e) of pulverizing a solid resulting from the cooling in step (d) to obtain a powdered fat and/or oil composition.

The detail will be described. First, the fat and/or oil composition containing the XXX triglyceride and the X2Y triglyceride is melted, and a fat and/or oil composition is thus obtained in a molten state and then cooled to form a solid having voids with a larger volume than the fat and/or oil composition in the molten state. The fat and/or oil composition in the form of solid having voids can be pulverized by adding a light impact, so that the solid easily collapses into a powder form.

Herein, the means for adding a light impact is not particularly specified. For example, a pulverization (loosening) method by gently vibrating (applying an impact to) the solid by shaking, sieving, or the like is simple and preferable.

<Other Ingredients Incorporated in Powdered Fat and/or Oil Composition>

The powdered fat and/or oil composition of the present invention may optionally contain other ingredients such as an emulsifier, a protein, a starch, and an antioxidant. For example, adding an ingredient having an emulsification action to the powdered fat and/or oil composition makes it possible to enhance the dispersibility of the powdered fat and/or oil composition into an aqueous system. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the powdered fat and/or oil composition is 100% by mass, for example.

However, a preferable powdered fat and/or oil composition of the present invention is preferably substantially constituted only of a fat and/or oil. Herein, the fat and/or oil is substantially constituted only of triglycerides. Moreover, the term "substantially" means that the content of an ingredient (s) other than the fat and/or oil incorporated in the powdered fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Content of Powdered Fat and/or Oil Composition>

The cream of the present invention contains 1 to 20% by mass of the powdered fat and/or oil composition in a raw material of the cream, provided that a total mass of all raw materials of the cream is 100% by mass. The content of the powdered fat and/or oil composition is more preferably 2 to 15% by mass, and furthermore preferably 5 to 10% by mass.

If the powdered fat and/or oil composition exceeds 20% by mass of the cream, the emulsion becomes slightly unstable, and the taste becomes too rich. On the other hand, if the powdered fat and/or oil composition is less than 1% by mass of the cream, desired effects are not obtained.

Meanwhile, the content of the powdered fat and/or oil composition can also be expressed by a ratio thereof to a total mass of an oil phase of the cream of the present invention. Specifically, the cream of the present invention contains 2 to 50% by mass of the powdered fat and/or oil composition of the present invention in the oil phase, provided that the total mass of the oil phase is 100% by mass. The content of the powdered fat and/or oil composition is more preferably 5 to 40% by mass, and furthermore preferably 10 to 30% by mass.

<Oily Food Products Incorporated in Oil Phases of Creams>

The oil phases of the creams of the present invention can optionally contain an oily food product in addition to the powdered fat and/or oil composition. Examples of such an oily food product include edible oils, margarines, fat spreads, shortenings, and the like. One or a combination of at least two of these can be used. As raw materials of the oily food products, it is possible to use, for example, coconut oil, palm kernel oil, palm oil, palm fractionated oil (such as palm olein or palm super olein), shea butter, fractionated shea butter, sal fat, fractioned sal fat, illipe butter, soybean oil, rapeseed oil, cottonseed oil, safflower oil, sunflower seed oil, rice oil, corn oil, sesame oil, olive oil, milk fat, cocoa butter, or the like, a fat and/or oil mixture thereof, a processed fat and/or oil thereof, or the like. The amount of these oily food products can be any amount, as long as the effects of the present invention are not impaired.

<Aqueous Food Products Incorporated in Water Phases of Creams>

The creams of the present invention can optionally contain an aqueous food product in addition to the powdered fat and/or oil composition. Examples of such an aqueous food product include saccharides such as sugars, syrups, fondants, and millet jelly, dairy products such as powdered milk and condensed milk, eggs such as raw eggs, yolks, and egg whites, and the like. One or a combination of at least two of these can be used. The amount of these aqueous food products can be any amount, as long as the effects of the present invention are not impaired.

<Other Ingredients Incorporated in Creams>

In the creams of the present invention, raw materials, which are generally blended in producing creams, can be optionally used other than the powdered fat and/or oil composition, the oily food products, and the aqueous food products. Specifically, it is possible to incorporate, for example, a protein, an emulsifier, a stabilizer, various phosphates, sodium hydrogen carbonate, or the like, and further it is possible to use chocolate, cocoa, coffee, a fruit juice, a jam, a fruit source, matcha, a cheese, a nut paste, a preservative, a pigment, a flavoring, or the like. The amount of these other ingredients can be any amount, as long as the effects of the present invention are not impaired.

<Method for Producing Creams>

The creams of the present invention can be produced by conventionally known methods. For example, an oil phase containing an oily food product or the like is mixed with a water phase containng an aqueous food product or the like, and pre-emulsified, followed by homogenization, sterilization or eradication treatment, and again homogenization, cooling, aging, and so on, so that the creams of the present invention can be produced. Generally, the powdered fat and/or oil composition of the present invention is added at the stage of the mixing treatment. Note that, before and after the sterilization or eradication treatment, the homogenization treatment and stirring treatment can be performed. The homogenization may be either pre-homogenization or post-homogenization, or a two-stage homogenization including a combination of both the pre-homogenization and the post-homogenization. Note that the emulsification treatment, homogenization treatment, and the stirring treatment can be performed by using a machine such as a paddle mixer, a homo mixer, or a homogenizer.

<Cream Quality Improver>

By the way, as has been described above, the powdered fat and/or oil composition used in the present invention improves conventional creams so that the creams can have a favorable melt-in-the-mouth, a sufficient shape retainability, and so forth. Thus, the present invention also relates to a cream quality improver containing the powdered fat and/or oil composition as an active ingredient. As described below, blending the cream quality improver of the present invention into raw materials of conventional creams makes it possible to bring about the effects of improving the quality such that the creams are altered to have a favorable melt-in-the-mouth, a sufficient shape retainability, and so forth.
The cream quality improver of the present invention contains the above-described powdered fat and/or oil composition. In order to exhibit the effect in a small amount, the cream quality improver of the present invention contains preferably 60% by mass or more, more preferably 80% by mass or more, and furthermore preferably 100% by mass or more of the powdered fat and/or oil composition.
Moreover, it is only necessary that the cream quality improver of the present invention contain the above-described powdered fat and/or oil composition as an active ingredient. Besides, the cream quality improver may contain other ingredients such as a fat and/or oil such as soybean oil or rapeseed oil, an excipient such as dextrin or starch, and a quality improver, within such ranges that the effects of the present invention are not impaired.
However, a preferable cream quality improver of the present invention is preferably substantially constituted only of the powdered fat and/or oil composition. Moreover, the term "substantially" means that the content of an ingredient(s) other than the powdered fat and/or oil composition incorporated in the cream quality improver is, for example, 0 to 15% by mass, preferably 0 to 10% by mass, and more preferably 0 to 5% by mass, relative to 100% by mass of the cream quality improver.

[Examples]

Next, the present invention will be described in further details based on Examples and Comparative Examples. However, the present invention is not limited to these at all. Moreover, in the following description, "%" means % by mass, unless otherwise noted.

<Raw Material Fat and/or Oil>

(1) Powdered fat and/or oil composition (melting point approximately 28°C):

[x = 10, y = 18, tempering process]

Into a 500-mL four-necked flask equipped with a stirrer, a thermometer, a nitrogen gas inlet tube, and a water separator, 44.1 g (0.479 mol) of glycerin (manufactured by Sakamoto Yakuhin Kogyo Co., Ltd.), 25.9 g (0.091 mol) of stearic acid (Palmac 98-18 (manufactured by Acidchem International Sdn Bhd)), and 266.0 g (1.544 mol) of capric acid (Palmac 99-10 (manufactured by Acidchem International Sdn Bhd)) were placed. These were reacted under a nitrogen stream at a temperature of 250°C for 15 hours. Excessive capric acid was distilled off at 190°C under a reduced pressure, followed by bleaching, filtration, and deodorization. Thus, 245 g of a pale yellow liquid reaction product at 50°C was obtained (XXX type: 80.6% by mass, X2Y type: 17.3% by mass). Raw material fats (XXX type: 94.0% by mass, X2Y type: 5.2% by mass) were prepared by mixing 60 g of the obtained reaction product with 140 g of tricaprin (manufactured by The Nisshin OilliO Group, Ltd.) . The raw material fats were maintained at 80°C for 0.5 hours and completely melted. The resultant was cooled in a thermostatic chamber at 10°C for 1 hour, and then left standing in the rmostatic chamber at 20°C for 12 hours. A solid having voids with an increased volume was formed and then loosened. Thus, a powdered crystalline composition was obtained (loose bulk density: 0.3 g/cm$^3$, average particle diameter of 116 $\mu$m). The powdered fat and/or oil composition thus obtained was used in the following Examples.

Here, the loose bulk density was calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of the sample was let fall toward a receiver (a 100-mL cylindrical container with an inner diameter of 40 mm $\times$ a height of 85 mm) from a height position 38 mm above an upper opening of the receiver. Subsequently, the sample protruding from the receiver was slid off, and the mass (A g) of the sample corresponding to the internal capacity (100 mL) of the receiver was weighed. The loose bulk density was determined from the following formula.

$$\texttt{Loose bulk density (g/mL) = A (g)/100 (mL)}$$

The measurement was repeated three times to obtain the average as the measurement value.

Here, the average particle diameter was measured based on laser diffraction/scattering methods (ISO133201, ISO9276-1) using Microtrac MT3300ExII manufactured by Nikkiso Co., Ltd.).

<Other Raw Materials>

Used in Examples described later were all commercially available: maltose syrup, a liquor (Cointreau), a flavoring (natural vanilla flavor), granulated sugar, plant-derived fresh cream (plant-derived fat content: 40%) . In addition, as a shortening, *Nisshin Tienta 20* (for professional use: manufactured by The Nisshin OilliO Group, Ltd.) was used. Moreover, as an oil-in-water emulsion (cream base), *Merupia* base (for professional use: manufactured by The Nisshin OilliO Group, Ltd.) was used.

[Example 1]

<Production of Butter Cream>

According to the formulas in Table 1 below, butter creams of Example 1 and Comparative Example 1 were produced according to ordinary methods. More specifically, the powdered fat and/or oil composition of the present invention was added to the shortening and gently mixed. Then, the *Merupia* base was added thereto and well mixed (specific gravity: 0.5). The other materials having been mixed together in advance were further added to the resultant and well mixed to adjust the specific gravity to 0.6.

| [Table 1] Butter cream formula and evaluation | | | | |
|---|---|---|---|---|
| | Example 1 | | Comparative Example 1 | |
| Blended raw materials | (g) | (%) | (g) | (%) |
| Shortening | 80.0 | 28.0 | 100.0 | 35.0 |
| Powdered fat and/or oil composition | 20.0 | 7.0 | - | - |
| *Merupia* base | 60.0 | 21.0 | 60.0 | 21.0 |
| Maltose syrup | 120.0 | 42.0 | 120.0 | 42.0 |
| Liquor | 5.0 | 1.8 | 5.0 | 1.8 |
| Flavoring | 0.6 | 0.2 | 0.6 | 0.2 |
| Raw material total | 285.6 | 100.0 | 285.6 | 100.0 |
| Evaluation results | | | | |
| Melt-in-the-mouth | ○ | | × | |
| Shape retainability | ○ | | Δ | |
| Appearance | ○ | | Δ | |
| Flavor | ○ | | × | |
| Mouthfeel | ○ | | × | |
| Cooling sensation | ○ | | × | |

<Evaluation of Butter Cream>

The butter creams of Example 1 and Comparative Example 1 produced above were evaluated according to the following evaluation methods.

<Cream Evaluation Methods>

(1) Melt-in-the-mouth evaluation method

A comprehensive evaluation was conducted by five skilled panelists according to the following criteria. Note that, after the production followed by storage at 20°C for 1 day, the butter creams were eaten and evaluated.

○: having a favorable melt-in-the-mouth without non-melt residue perception
Δ : having a. somewhat poor melt-in-the-mouth with a slight non-melt residue perception
× : having a poor melt-in-the-mouth with a non-melt residue perception

(2) Shape retainability evaluation method

A comprehensive evaluation was conducted by five skilled panelists according to the following criteria. Note that, after the production, each butter cream was formed into a flower shape on a Petri dish and then stored at 25°C for 3 days, and the stability of the formed flower was visually observed and evaluated.

○ : no shape deformation, resulting in a favorable shape retainability
Δ : slight shape deformation was observed, resulting in a somewhat poor shape retainability
× : the shape was deformed with oil stain, resulting in an unfavorable shape retainability

(3) Appearance evaluation method

A comprehensive evaluation was conducted by five skilled panelists according to the following criteria. Note that, after the production followed by storage at 30°C for 2 days, the appearances were visually observed and evaluated.

○ : the surface was smooth and had white gloss

Δ : the surface was slightly cracked, and the white gloss was somewhat poor

✕ : the surface was rough and cracked, and had no white gloss

(4) Flavor evaluation method

A comprehensive evaluation was conducted by five skilled panelists according to the following criteria. Note that, after the production followed by storage at 20°C for 1 day, the butter creams were eaten and evaluated.

○ : the flavor was brought out quickly, and was favorable

Δ : the flavor was brought out somewhat slowly, and was slightly poor

✕ : the flavor was brought out slowly, and was poor (5) Mouthfeel evaluation method

A comprehensive evaluation was conducted by five skilled panelists according to the following criteria. Note that, after the production followed by storage at 20°C for 1 day, the butter creams were eaten and evaluated.

○: the mouth-felt hardness was just right

Δ : the mouthfeel was slightly sticky

✕: the mouthfeel was sticky and poor

(6) Cooling-sensation evaluation method

A comprehensive evaluation was conducted by five skilled panelists according to the following criteria. Note that, after the production followed by storage at 20°C for 1 day, the butter creams were eaten and evaluated.

○: having a cooling sensation

Δ : slightly having a cooling sensation.

✕ : having no cooling sensation.

As apparent from the result of Table 1, it was found out that the butter cream (Example 1) produced by using the powdered fat and/or oil composition of the present invention had a good melt-in-the-mouth and a sufficient shape retainability and was excellent in appearance, flavor, and mouthfeel. Particularly, the aftertaste sharpness was good, improving the poor aftertaste of the conventional butter cream. On the other hand, the butter cream (Comparative Example 1) produced without using the powdered fat and/or oil composition of the present invention was slightly inferior to Example in appearance and shape retainability, and apparently had a poor melt-in-the-mouth. Moreover, the butter cream (Comparative Example 1) had a uniquely sticky mouthfeel, and the flavor and mouthfeel thereof were apparently inferior to those of Example 1. Note that the butter cream (Example 1) produced by using the powdered fat and/or oil composition of the present invention had a unique cooling sensation.

[Example 2]

<Production of Whipped Cream>

According to the formulas in Table 2 below, whipped creams of Example 2 and Comparative Example 2 were produced according to ordinary methods. More specifically, the powdered fat and/or oil composition of the present invention was mixed with the granulated sugar, and the fresh cream was added thereto and well mixed in the presence of ice water to adjust the specific gravity to 0.4. Note that the powdered fat and/or oil composition was not used in Comparative Example 2.

| [Table 2] Whipped cream formula and evaluation | | | | |
|---|---|---|---|---|
| | Example 2 | | Comparative Example 2 | |
| Blended raw materials | (g) | (%) | (g) | (%) |
| Powdered fat and/or oil composition | 10.0 | 4.5 | - | - |
| Granulated sugar | 14.0 | 6.2 | 14.0 | 6.5 |
| Fresh cream | 200.0 | 89.3 | 200.0 | 93.5 |

(continued)

| [Table 2] Whipped cream formula and evaluation | | | | |
|---|---|---|---|---|
| | Example 2 | | Comparative Example 2 | |
| Blended raw materials | (g) | (%) | (g) | (%) |
| Raw material total | 224.0 | 100.0 | 214.0 | 100.0 |
| Evaluation results | | | | |
| Melt-in-the-mouth | ○ | | × | |
| Shape retainability | ○ | | × | |
| Appearance | ○ | | × | |
| Flavor | ○ | | × | |
| Mouthfeel | ○ | | × | |
| Cooling sensation | ○ | | × | |

<Evaluation of Whipped Cream>

The whipped creams of Example 2 and Comparative Example 2 produced above were evaluated according to the cream evaluation methods described above.

As apparent from the result of Table 2, it was found out that the whipped cream (Example 2) produced by using the powdered fat and/or oil composition of the present invention had a good melt-in-the-mouth and a sufficient shape retainability and was excellent in appearance, flavor, and mouthfeel. On the other hand, the whipped cream (Comparative Example 2) produced without using the powdered fat and/or oil composition of the present invention became soft as a whole, and was poor in appearance and shape retainability. Moreover, the melt-in-the-mouth was also poor, and the mouthfeel and flavor were also apparently inferior to those of Example 2. Note that the whipped cream (Example 2) produced by using the powdered fat and/or oil composition of the present invention had a unique cooling sensation.

[Examples 3 to 6]

<Differences among Various Whipped Creams>

According to the formulas in Tables 3 to 6 below, whipped creams of Examples 3 to 6 and Comparative Examples 3 to 6 were produced according to ordinary methods. More specifically, the powdered fat and/or oil composition of the present invention was mixed with the granulated sugar. The resultant was added to various creams (creams A to D below), well mixed in the presence of ice water, and whipped to such a state that the mixtures became suitable as whipped creams (in the state, each mixture was capable of being shaped into a full star form when piped) . The tables show the mixing times in the states and the specific gravities of the whipped creams thus formed. Moreover, the tables also show the flavor evaluations of melt-in-the-mouth and so forth. Note that, in Comparative Examples 3 to 6, the whipped creams were produced without using the powdered fat and/or oil composition.

Further, the creams A to D used were as follows.

Cream A: pure milk fat type (manufactured by NAKAZAZA, product name: *"Fresh Cream F"*)
Cream B: milk fat + emulsifier type (manufactured by Megmilk Snow Brand Co., Ltd., product name: *"Fresh Using Fresh Cream Made in Hokkaido"*)
Cream C: milk fat + vegetable fat + emulsifier type (manufactured by NAKAZAWA, product name: *"Nice whip R")*
Cream D: pure vegetable fat type (manufactured by Megmilk Snow Brand Co., Ltd., product name: *"Whip Plant-Derived Fat"*)

| [Table 3] Whipped cream formula and results | | | | |
|---|---|---|---|---|
| | Example 3 | | Comparative Example 3 | |
| Blended raw materials | (g) | (%) | (g) | (%) |

(continued)

| [Table 3] Whipped cream formula and results | | | | |
|---|---|---|---|---|
| | Example 3 | | Comparative Example 3 | |
| Powdered fat and/or oil composition | 15.0 | 2.7 | - | - |
| Granulated sugar | 40.0 | 7.2 | 40.0 | 7.4 |
| Cream A | 500.0 | 90.1 | 500.0 | 92.6 |
| Raw material total | 555.0 | 100.0 | 540.0 | 100.0 |
| Results | | | | |
| Mixing time | 2 min. and 58 sec. | | 3 min. and 2 sec. | |
| Specific gravity | 0.47 | | 0.44 | |
| Flavor (melt-in-the-mouth etc.) | ◎ | | ○ | |

| [Table 4] Whipped cream formula and results | | | | |
|---|---|---|---|---|
| | Example 4 | | Comparative Example 4 | |
| Blended raw materials | (g) | (%) | (g) | (%) |
| Powdered fat and/or oil composition | 15.0 | 2.7 | - | - |
| Granulated sugar | 40.0 | 7.2 | 40.0 | 7.4 |
| Cream B | 500.0 | 90.1 | 500.0 | 92.6 |
| Raw material total | 555.0 | 100.0 | 540.0 | 100.0 |
| Results | | | | |
| Mixing time | 4 min. and 10 sec. | | 4 min. and 37 sec. | |
| Specific gravity | 0.36 | | 0.35 | |
| Flavor (melt-in-the-mouth etc.) | ◎ | | ○ | |

| [Table 5] Whipped cream formula and results | | | | |
|---|---|---|---|---|
| | Example 5 | | Comparative Example 5 | |
| Blended raw materials | (g) | (%) | (g) | (%) |
| Powdered fat and/or oil composition | 15.0 | 2.7 | - | - |
| Granulated sugar | 40.0 | 7.2 | 40.0 | 7.4 |
| Cream C | 500.0 | 90.1 | 500.0 | 92.6 |
| Raw material total | 555.0 | 100.0 | 540.0 | 100.0 |
| Results | | | | |
| Mixing time | 3 min. and 15 sec. | | 3 min. and 45 sec. | |
| Specific gravity | 0.40 | | 0.37 | |
| Flavor (melt-in-the-mouth etc.) | ○ | | Δ | |

| [Table 6] Whipped cream formula and results | | | | | |
|---|---|---|---|---|---|
| | Example 6 | | | Comparative Example 6 | |
| Blended raw materials | (g) | (%) | | (g) | (%) |
| Powdered fat and/or oil composition | 15.0 | 2.7 | | - | - |
| Granulated sugar | 40.0 | 7.2 | | 40.0 | 7.4 |
| Cream D | 500.0 | 90.1 | | 500.0 | 92.6 |
| Raw material total | 555.0 | 100.0 | | 540.0 | 100.0 |
| Results | | | | | |
| Mixing time | 5 minutes and 10 seconds | | | 5 minutes and 10 seconds | |
| Specific gravity | 0.37 | | | 0.36 | |
| Flavor (melt-in-the-mouth etc.) | ○ | | | Δ | |

<Evaluation of Whipped Cream>

The whipped creams of Examples 3 to 6 and Comparative Examples 3 to 6 produced above were evaluated for the flavor, melt-in-the-mouth, and so forth according to the following evaluation method.

<Flavor, melt-in-the-mouth, etc. evaluation method>

A comprehensive evaluation was conducted by five skilled panelists according to the following criteria. Note that, after the production, the whipped creams were stored in a thermostatic chamber at 5°C overnight. After the whipped creams became stable, the flavor evaluation was conducted.

◎ : having a favorable melt-in-the-mouth and a sharp cooling sensation without non-melt residue perception
○ : having a somewhat favorable melt-in-the-mouth without non-melt residue perception
Δ : having a somewhat poor melt-in-the-mouth with a slight non-melt residue perception
× : having a poor melt-in-the-mouth with a non-melt residue perception

As apparent from the results of Tables 3 to 6, the whipped creams (Examples 3 to 6) produced by using the powdered fat and/or oil composition of the present invention appearred to have such a tendency that, regardless of the type of cream, the mixing times are slightly short in comparison with those of the whipped creams of Comparative Examples 3 to 6. This is quite an important property for the mass production. Moreover, the whipped creams (Examples 3 to 6) produced by using the powdered fat and/or oil composition of the present invention appearred to have such tendencies that the specific gravities were slightly high and the whipped creams become slightly heavy and firm in comparison with the whipped creams of Comparative Examples 3 to 6. On the other hand, it was found out that the whipped creams of Comparative Examples 3 to 6, to which the powdered fat and/or oil composition of the present invention was not added, had low specific gravities and such physical properties of being slightly light and soft.
Note that the presence or absence of the powdered fat and/or oil composition of the present invention did not have an influence on the whipping suitability. The fat and/or oil composition did not adversely influence the whipping.
Next, in the flavor evaluation, the whipped creams (Examples 3 to 6) produced by using the powdered fat and/or oil composition of the present invention each appearred to have such a tendency that the melt-in-the-mouth is good. In addition, the whipped creams had unique cooling sensations and good sharpnesses. These Examples revealed that whipped creams excellent in flavor, melt-in-the-mouth, and so forth are obtained regardless of the type of cream.

[Example 7]

<Differences in Flavor Release>

According to the formulas in Table 7 below, whipped creams of Example 7 and Comparative Example 7 were produced according to ordinary methods. More specifically, the powdered fat and/or oil composition of the present invention was mixed with the granulated sugar. The resultant was added to the cream D, and a flavoring (a small amount) was further added thereto, well mixed in the presence of ice water, and whipped to such a state that the mixture became suitable as a whipped cream (in the state, the mixture was capable of being shaped into a full star form when piped) . The flavor of the flavoring in the whipped cream thus formed was evaluated.

Note that the flavoring used was as follows. Moreover, since the amount of the flavoring was quite small (approximately 0.3%) in comparison with the other raw materials, the amount was omitted from Table 7.

Flavoring: vanilla flavoring (sold by Dover Ltd. , product name : "Mon Reunion")

| [Table 7] Whipped cream formula and results | | | | |
|---|---|---|---|---|
| | Example 7 | | Comparative Example 7 | |
| Blended raw materials | (g) | (%) | (g) | (%) |
| Powdered fat and/or oil composition | 15.0 | 2.7 | - | - |
| Granulated sugar | 40.0 | 7.2 | 40.0 | 7.4 |
| Cream D | 500.0 | 90.1 | 500.0 | 92.6 |
| Raw material total | 555.0 | 100.0 | 540.0 | 100.0 |
| Results | | | | |
| Flavor of flavoring | ◎ | | ○ | |

<Evaluation of Whipped Cream>

The whipped creams of Example 7 and Comparative Example 7 produced above were evaluated for the flavor of the flavoring according to the following evaluation method.

<Flavoring's flavor evaluation method>

A comprehensive evaluation was conducted by five skilled panelists according to the following criteria.

◎ : the flavor of the cream and the flavor of the flavoring were well balanced in harmony.
○: the flavor of the cream and the flavor of the flavoring were somewhat well balanced.
Δ : the flavor of the cream and the flavor of the flavoring were slightly unbalanced.
× : the balance between the flavor of the cream and the flavor of the flavoring was poor.

As apparent from the result of Table 7, it was found out that the whipped cream (Example 7) produced by using the powdered fat and/or oil composition of the present invention had the flavor of the original cream and the the flavor of the flavoring well balanced in harmony, producing a flavor preferred by consumers. This Example revealed that the powdered fat and/or oil composition of the present invention has an effect of well balancing the flavor of the original cream with the flavor of the flavoring.

**Claims**

1. A powdered fat and/or oil composition for creams, comprising a fat and/or oil composition in a powder form satisfying the following condition (a), wherein

   (a) the fat and/or oil composition comprises:

   65 to 99% by mass of a XXX triglyceride having fatty acid residues X, each with x carbon atoms, at positions 1 to 3; and
   35 to 1% by mass of one or more types of X2Y triglycerides each having a fatty acid residue Y with y carbon atoms in place of one of the fatty acid residues X of the XXX triglyceride, provided that a total triglyceride content is 100% by mass,

   x number of carbon atoms is an integer selected from 8 to 20, and
   y number of carbon atoms is each independently an integer selected from x+2 to x+12 and satisfying y≤22.

**2.** The powdered fat and/or oil composition according to claim 1, comprising:

> 80 to 99% by mass of the XXX triglyceride; and
> 20 to 1% by mass of the one or more types of X2Y triglycerides in total.

**3.** The powdered fat and/or oil composition according to claim 1 or 2, wherein
the x is an integer selected from 10 to 18, and
the y is each independently an integer selected from x+2 to x+10 and satisfying y≤22.

**4.** The powdered fat and/or oil composition according to any one of claims 1 to 3, wherein
the x is an integer selected from 10 to 12, and
the y is each independently an integer selected from x+4 to x+8 and satisfying y≤22.

**5.** The powdered fat and/or oil composition according to any one of claims 1 to 4, which has a loose bulk density of 0.1 to 0.6 g/cm$^3$.

**6.** A cream comprising the powdered fat and/or oil composition according to any one of claims 1 to 5.

**7.** The cream according to claim 6, comprising 1 to 20% by mass of the powdered fat and/or oil composition in a raw material of the cream.

**8.** A method for producing a cream, comprising blending the powdered fat and/or oil composition according to any one of claims 1 to 5.

**9.** The method for producing a cream according to claim 8, comprising blending 1 to 20% by mass of the powdered fat and/or oil composition into a raw material of the cream.

**10.** A cream quality improver comprising the powdered fat and/or oil composition according to any one of claims 1 to 5 as an active ingredient.

**EP 3 262 949 A1**

**INTERNATIONAL SEARCH REPORT**

| International application No. |
|---|
| PCT/JP2016/055422 |

| A. CLASSIFICATION OF SUBJECT MATTER |
|---|
| *A23D9/007*(2006.01)i, *A23C13/12*(2006.01)i, *A23L9/20*(2016.01)i, *C11C3/00* (2006.01)i |

According to International Patent Classification (IPC) or to both national classification and IPC

| B. FIELDS SEARCHED |
|---|
| Minimum documentation searched (classification system followed by classification symbols) |
| A23D9/007, A23C13/12, A23L9/20, C11C3/00 |

Documentation searched other than minimum documentation to the extent that such documents are included in the fields searched

Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)
JSTPlus/JMEDPlus/JST7580(JDreamIII), CAplus/MEDLINE/EMBASE/BIOSIS(STN)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 02-299544 A (Tsukishima Foods Industry Co., Ltd.), 11 December 1990 (11.12.1990), claims (Family: none) | 1-10 |
| A | JP 10-295307 A (Snow Brand Food Co., Ltd.), 10 November 1998 (10.11.1998), claims (Family: none) | 1-10 |
| P,X | WO 2016/013582 A1 (The Nisshin Oillio Group, Ltd.), 28 January 2016 (28.01.2016), claims (Family: none) | 1-10 |

☐  Further documents are listed in the continuation of Box C.        ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 April 2016 (08.04.16) | 10 May 2016 (10.05.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**EP 3 262 949 A1**

**Patent documents cited in the description**

- JP HEI827 A
- JP 2015070850 W
- JP 2014149168 A